Europäisches Patentamt

(19) European Patent Office

Office européen des brevets

(11) Publication number: **0 136 574**
**B1**

(12) **EUROPEAN PATENT SPECIFICATION**

(45) Date of publication of patent specification: **19.08.87**

(21) Application number: **84110461.5**

(22) Date of filing: **03.09.84**

(51) Int. Cl.⁴: **G 11 B 13/04**

(54) **Magneto-optical apparatus.**

(30) Priority: **05.09.83 JP 162955/83**

(43) Date of publication of application:
**10.04.85 Bulletin 85/15**

(45) Publication of the grant of the patent:
**19.08.87 Bulletin 87/34**

(84) Designated Contracting States:
**AT DE FR GB IT NL**

(56) References cited:
**EP-A-0 061 892**
**GB-A-2 083 677**
**GB-A-2 095 887**
**US-A-4 118 734**
**US-A-4 403 318**
**US-A-4 419 750**

**PATENT ABSTRACTS OF JAPAN vol. 7, no. 180,
9th August 1983, page (P-125) (1325);**

(73) Proprietor: **SONY CORPORATION**
**7-35 Kitashinagawa 6-Chome Shinagawa-ku
Tokyo 141 (JP)**

(72) Inventor: **Aoki, Yoshio c/o Sony Corporation
7-35 Kitashinagawa 6-chome
Shinagawa-ku Tokyo (JP)**
Inventor: **Tsukamura, Yoshihiro c/o Sony
Corporation
7-35 Kitashinagawa 6-chome
Shinagawa-ku Tokyo (JP)**

(74) Representative: **Patentanwälte TER MEER -
MÜLLER - STEINMEISTER
Mauerkircherstrasse 45
D-8000 München 80 (DE)**

Courier Press, Leamington Spa, England.

## Description

### I. Field of the Invention

The present invention relates to a magneto-optical apparatus for writing, reading and erasing information by irradiation with a laser beam on a magneto-optical medium which uses an amorphous material for a recording layer and which is subjected to information writing and erasure.

### II. Description of the Prior Art

In a magneto-optical medium subjected to information writing and reading upon irradiation of a laser beam, in order to eliminate recording pits as a write pattern by changing a magnetization direction of the recording layer upon irradiation of the laser beam, an effective beam spot diameter of the laser beam must be larger than that at the write mode. This is because the pit size becomes larger than that of the effective beam spot diameter obtained in the write mode, and the pits cannot be effectively completely eliminated unless the beam spot in the erasure mode has a larger diameter than that in the write mode.

However, when a laser beam spot diameter is increased by increasing the laser output, the amorphous material of the recording layer is crystallized to disable re-recording, resulting in inconvenience.

Furthermore, in a magneto-optical medium having a recording layer on the upper and lower surfaces of a protective films so as to perform two-side recording, when the laser output level is excessively increased to eliminate recording pits on one side in the erasure mode, the recording layer on the other side is adversely affected.

### Summary of the Invention

It is a first object of the present invention to provide a magneto-optical apparatus wherein a beam spot diameter irradiating a magneto-optical medium can be increased without increasing a laser output level and without causing crystallization of an amorphous material of a recording layer.

It is a second object of the present invention to provide a magneto-optical apparatus wherein when one side of a two-sided magneto-optical medium is subjected to erasure, a recording layer on the other side will not be adversely affected.

### Brief Description of the Drawings

Fig. 1A is a schematic view of an optical system;

Fig. 1B is a schematic view of signal system optical detecting means;

Fig. 1C is a schematic view of servo system optical means;

Fig. 2 is a schematic view of a magneto-optical record medium to be used with the invention;

Figs. 3A, 3B and 3C are respectively schematic sectional views for explaining the principle for writing information in a recording layer;

Fig. 4 is a block diagram of a focus coil control circuit; and

Fig. 5 is a sectional view for explaining a state wherein a laser beam irradiates a magneto-optical disk.

### Detailed Description of the Preferred Embodiment

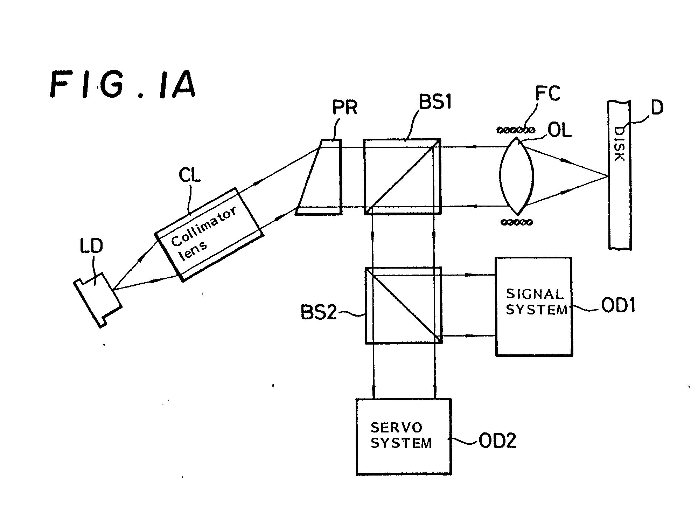

Referring to Fig. 1A, a laser beam emitted from a semiconductor laser LD is collimated by a collimator lens CL. The collimated beam passes through a shape correction prism PR for correcting a sectional shape of the beam to a circular section. The corrected beam is then incident on a first beam splitter BS1. The beam transmitted through the first beam splitter BS1 is focused by an objective lens OL, so that a beam spot is formed on a magneto-optical disk D.

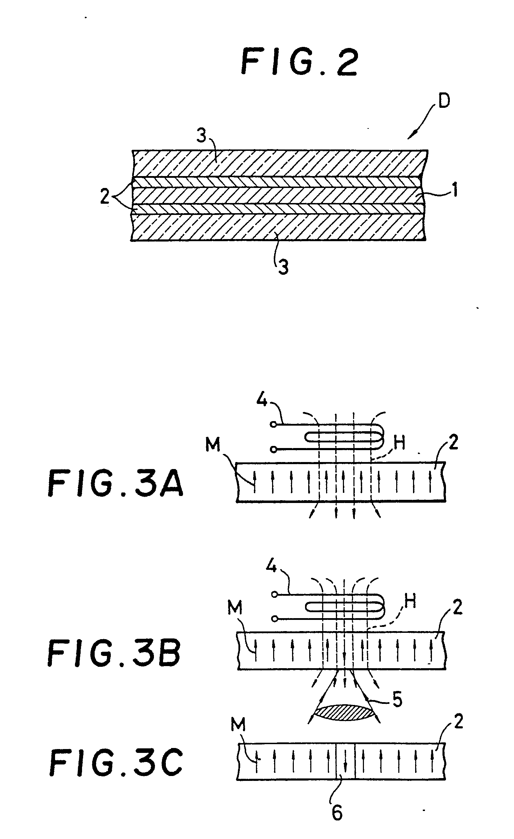

The magneto-optical disk D comprises a two-sided recording medium. As shown in Fig. 2, vertically magnetized films 2 are formed on the upper and lower surfaces of a protective film 1, and transparent layers 3 are formed on the vertically magnetized films 2, respectively. Each vertically magnetized film 2 consists of a rare earth-iron based amorphous material.

Information is written in the magneto-optical disk D in a manner shown in Figs. 3A, 3B and 3C. As shown in Fig. 3A, a weak magnetic field H is applied to the vertically magnetized film 2 by a coil 4 or a permanent magnet in a direction subjected to recording. In this state, the magnetization directions of magnetized portions M are aligned, as indicated by arrows. Subsequently, as shown in Fig. 3B, a laser beam 5 irradiates a portion of the vertically magnetized film 2 which is subjected to recording, while the magnetic field H is being applied in the manner shown in Fig. 3A. The portion is heated to invert the magnetization direction thereof. As shown in Fig. 3C, a recording pit 6 having a reverse magnetization direction is formed. The recording pit 6 is formed in tracks which are spirally or concentrically formed in the magneto-optical disk D.

Erasure of the recording pit 6 written in the magneto-optical disk D is similarly performed by the coil 4 or the permanent magnet to reverse the magnetization direction of the magnetic field H.

On the other hand, a return beam reflected by the magneto-optical disk D is incident on the objective lens OL and is collimated. A collimated beam is incident on the first beam splitter BS1. A reflected beam component of the return beam is incident on a second beam splitter BS2.

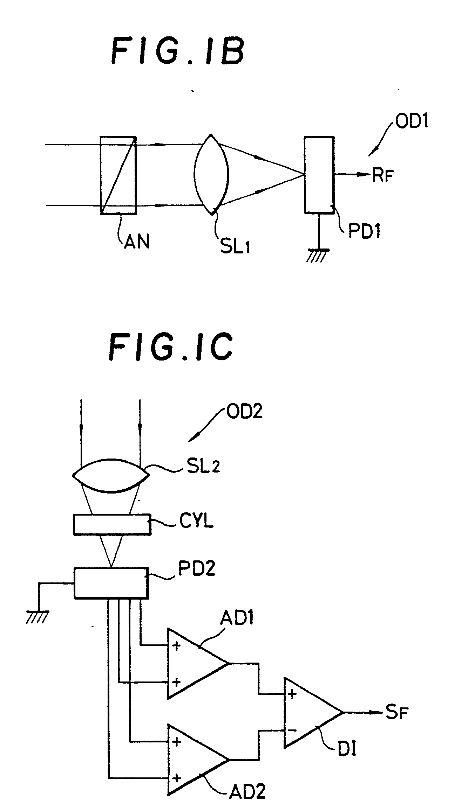

The return beam reflected by the second beam splitter BS2 is incident on a signal system optical detecting means OD1. The optical detecting means OD1 comprises an analyzer AN, a lens SL1 and a photodetector PD1, as shown in Fig. 1B. When the return beam is incident on the analyzer AN, the photodetector PD1 generates a read information singal $R_F$.

Since a plane of polarization of the return beam is rotated by the magnetization direction of the recording pit 6 in accordance with the Kerr effect, the rotation of the plane of polarization is detected by the photodetector PD1 to read the signal $R_F$ from the magneto-optical disk D.

On the other hand, the return beam passing through the second beam splitter BS2 is incident on a servo system optical detecting means OD2. The optical detecting means OD2 comprises a lens SL2, a cylindrical lens CYL, a photodetector PD2, adders AD1 and AD2 and a subtracter DI, as shown in Fig. 1C. The return beam is incident on the lens SL2. Four detecting sections (not shown) are arranged in the photodetector PD2. Detection signals from one pair of detecting sections diagonally opposing each other are supplied to the adder AD1, and detection signals from the other pair of detecting sections are supplied to the adder AD2. Outputs from the adders AD1 and AD2 are supplied to the subtracter DI, and the subtracter DI generates a focus error signal $S_F$. The generation technique of the signal $S_F$ is disclosed in U.S.P. No. 4,023,033, and a detailed description thereof will be omitted.

The focus error signal $S_F$ is applied to a focus coil FC to move the objective lens OL along a focus direction by a closed loop focus servo system. A tracking servo system including a detection of a tracking error signal is not substantially associated with the scope of the present invention, and a detailed description thereof will be omitted.

The drive control of the objective lens OL in the erasure mode will be described.

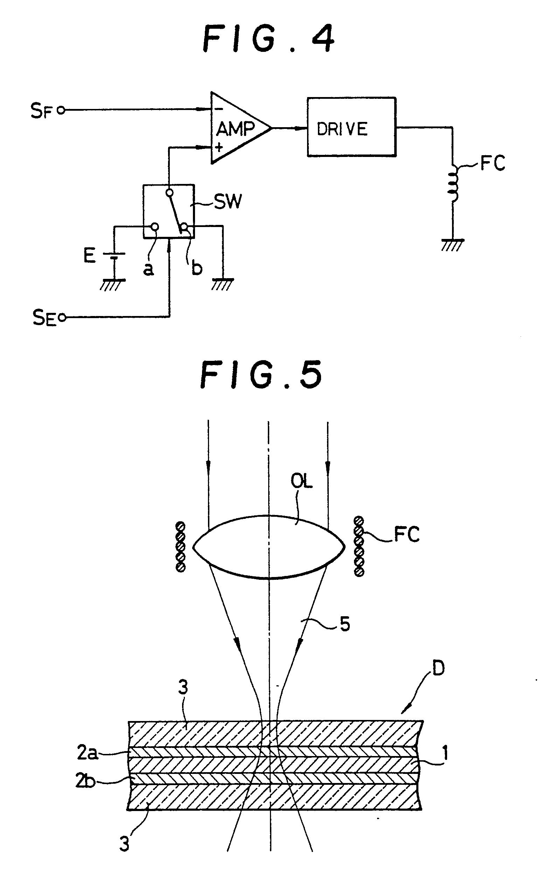

Fig. 4 shows a control circuit.

The focus error signal $S_F$ generated from the servo system optical detecting means OD2 is supplied to one input terminal of a differential amplifier AMP. An output from a switch SW switched in response to an erasure instruction signal $S_E$ is supplied to the other input terminal of the differential amplifier AMP. One input terminal a of the switch SW receives a predetermined voltage E, and the other input terminal b thereof is grounded. The switch SW is switched from the input terminal b to the input terminal a in response to the erasure instruction signals $S_E$, so that the predetermined voltage E is applied to the other input terminal of the differential amplifier AMP. A different between the focus error signal $S_F$ and the predetermined voltage E is amplified by the amplifier AMP, and a predetermined DC signal is added to this focus error signal $S_F$.

The signal $S_F$ added with the DC signal is supplied to the focus coil FC through a drive circuit DRIVE. Therefore, the objective lens OL is shifted along the focus direction. In this case, as shown in Fig. 5, the beam 5 is focused before it reaches a vertically magnetized film 2a of the magneto-optical disk D which is subjected to erasure. The objective lens OL is shifted to a position corresponding to the predetermined voltage E in such a manner that a defocused beam irradiates the surface of the vertically magnetized film 2a. When the defocused beam 5 irradiates the vertically magnetized film 2a, the beam spot diameter is increased.

According to the present invention, therefore, in order to increase the diameter of the beam irradiating the vertically magnetized film 2a of the magneto-optical disk D which is subjected to erasure, without increasing the output level of the semiconductor laser LD, the beam spot diameter is increased by slightly defocusing the beam, thereby preventing the vertically magnetized film 2a from recrystallization. In addition, the beam 5 is focused at the position before the vertically magnetized film 2a. Therefore, even if one vertically magnetized film 2a of a two-sided magneto-optical disk D is subjected to erasure, the other vertically magnetized film 2b will not be adversely influenced.

In the above embodiment, the difference between the focus error signal $S_F$ and the predetermined voltage E is calculated by the differential amplifier AMP so as to add the predetermined DC signal to the focus error signal $S_F$. However, an adder may be used to add directly a predetermined DC signal to the focus error signal $S_F$.

## Claims

1. A magneto-optical apparatus for recording, reading and erasing information by radiating a laser beam (5) on a magneto-optical medium (D) which uses an amorphous material for a recording layer (2, 2a, 2b) and which is subjected to information writing and erasure, wherein a predetermined DC signal is added to a focus error signal ($S_F$) in an erasure mode, and the laser beam (5) irradiates the magneto-optical medium (D) in a defocused state.

2. An apparatus according to claim 1, wherein the laser beam (5) is focused at a position in front of one recording layer (2a) of a two-sided magneto-optical medium (D) having two recording layers (2a, 2b) when said one recording layer (2a) is subjected to erasure.

## Patentansprüche

1. Magneto-optisches Gerät zum Aufzeichnen, Wiedergeben und Löschen von Information durch Bestrahlung eines magneto-optischen Mediums (D) mit einem Laserstrahl (5), das eine Aufzeichnungsschicht (2, 2a, 2b) aus amorphem Material aufweist, die dem Schreiben und Löschen von Information ausgesetzt wird, und bei dem beim Löschen ein bestimmtes DC-Signal zu einem Brennpunktfehlersignal ($S_F$) derart addiert wird, daß der Laserstrahl (5) das magneto-optische Medium (D) defokusiert bestrahlt.

2. Vorrichtung nach Anspruch 1, dadurch gekennzeichnet, daß der Laserstrahl (5) vor der Aufzeichnungsschicht (2a) eines beidseitig mit Aufzeichnungsschichten (2a, 2b) versehenen magneto-optischen Mediums (D) fokusiert wird, wenn die eine Aufzeichnungsschicht (2a) gelöscht wird.

## Revendications

1. Appareil magnéto-optique destiné à enregistrer, écrire et effacer une information par rayonnement d'un faisceau laser (5) sur un support magnéto-optique (D) qui utilise un matériau amorphe pour une couche d'enregistrement (2, 2a, 2b) et qui est soumis à des opérations d'écriture et d'effacement d'information, où un signal de courant continu prédéterminé est ajouté à un signal d'erreur de focalisation ($S_F$) dans un mode d'effacement, et le faisceau laser (5) irradie le support magnéto-optique (D) dans un état défocalisé.

2. Appareil selon la revendication 1, où le faisceau laser (5) est focalisé en une position se trouvant en avant d'une première couche d'enregistrement (2a) d'un support magnéto-optique à deux faces (D) possédant deux couches d'enregistrement (2a, 2b) lorsque ladite première couche d'enregistrement (2a) est soumise à une opération d'effacement.

# FIG. IA

# FIG.IB

# FIG.IC

# F I G . 2

# FIG.3A

# FIG.3B

# FIG.3C

# FIG.4

# FIG.5